**Europäisches Patentamt**

**European Patent Office**

**Office européen des brevets**

(11) Veröffentlichungsnummer: **0 385 967**
**A2**

## EUROPÄISCHE PATENTANMELDUNG

(21) Anmeldenummer: **90890036.8**

(22) Anmeldetag: **15.02.90**

(51) Int. Cl.$^5$: **F16G 15/06**

(30) Priorität: **03.03.89 AT 489/89**

(43) Veröffentlichungstag der Anmeldung:
**05.09.90 Patentblatt 90/36**

(84) Benannte Vertragsstaaten:
**DE GB IT**

(71) Anmelder: **Steirische Kettenfabriken**
**Pengg-Walenta KG**
**Theodor-Körner Strasse 59**
**A-8021 Graz(AT)**

(72) Erfinder: **Walenta, Gerhart, Dipl.-Ing.**
**Baumschulgasse 18**
**A-8010 Graz(AT)**

(74) Vertreter: **Matschnig, Franz, Dipl.-Ing.**
**Siebensterngasse 54**
**A-1070 Wien(AT)**

(54) **Verbindungsstück für Kettengehänge.**

(57) Ein Verbindungsstuck (6) für Kettengehänge, mit einem oberen, in einen Gabelkopf (3) eines Anschlußgliedes (1) einhängbaren Aufhängeteil (7) sowie mit einem unteren Gabelende (9), das zumindest einen Einführspalt (10) sowie zumindest eine, senkrecht zu dem Einführspalt verlaufende Durchgangsbohrung (12) für einen ein Kettenglied (13) oder den Aufhängeteil eines weiteren Bauteils durchsetzenden Querbolzen (11)aufweist, bei welchem der Aufhängeteil als von einer Bohrung (8) durchsetzter Aufhängeflansch (7) ausgebildet ist und der Bolzen (5) und die Bohrung (51) des Aufhängeflansches (7) größeren Durchmesser (D1) aufweisen, als Bolzen (11) und Bohrung (12) im Gabelende (9).

Fig.1

Fig.2

EP 0 385 967 A2

Die Erfindung bezieht sich auf ein Verbindungsstück für Kettengehänge, mit einem oberen, in einen Gabelkopf eines Anschlußgliedes einhängbaren Aufhängeteil sowie mit einem unteren Gabelende, das zumindest einen Einführspalt sowie zumindest eine, senkrecht zu dem Einführspalt verlaufende Durchgangsbohrung für einen ein Kettenglied oder den Aufhängeteil eines weiteren Bauteils durchsetzenden Querbolzen aufweist.

Verbindungsglieder zwischen einem Aufhängeteil und einer oder mehreren Ketten sind in einer Vielzahl bekannt geworden.

Beispielsweise beschreibt die US-PS 4 429 526 ein Kuppelglied mit einer geschlossenen oberen Einhängeöffnung und einem Gabelende mit zwei parallelen Schlitzen, in welche die Enden eines U-förmigen Bügels eingeführt und über einem Bolzen mit dem Kuppelglied verbunden werden können. In den U-förmigen Bügel können die Endglieder zweier Ketten eingehängt werden.

Aus der DE-C-30 48 565 geht ein Gabelkopfelement mit einem ringförmigen Aufhängeteil hervor, das an seinem unteren Ende als einfacher Gabelkopf ausgebildet ist.

Ein aus der DE-B-14 25 411 bekannt gewordenes Kettenverbindungsglied besteht aus einem ringförmigen Mittelteil, der an seinem oberen Ende einen Gabelkopf und an seinem unteren Ende zwei getrennte Gabelköpfe besitzt. Mittels Bolzen können in die genannten drei Gabelköpfe die Endglieder von Ketten eingehängt werden.

Ziel der Erfindung ist die Schaffung eines Verbindungsstückes, das bei einfacher Konstruktion den Anschluß von Ketten an Bauteile oder den Zusammenschluß mehrerer Ketten ermöglicht, wobei der Zusammenbau ohne Spezialwerkzeuge durchführbar sein soll. Insbesondere soll das Verbindungsstück auch als Reduzierstück von einer Kettendimension auf die nächst kleinere einsetzbar sein.

Dieses Ziel läßt sich mit einem Verbindungsstück der eingangs genannten Art erreichen, bei welchem erfindungsgemäß der Aufhängeteil als von einer Bohrung durchsetzter Aufhängeflansch ausgebildet ist und daß Bolzen und Bohrung des Aufhängeflansches größeren Durchmesser aufweisen, als Bolzen und Bohrung im Gabelende.

Das Verbindungsstück nach der Erfindung läßt sich mit dem Aufhängeflansch in den Gabelkopf eines herkömmlichen Anschlußgliedes einhängen, das beispielsweise entsprechend dem in der DE-C-30 48 565 angegebenen Stand der Technik entspricht. Ebenso kann es in das Gabelende eines weiteren Verbindungsstückes nach der Erfindung, das jedoch um eine Stufe größer dimensioniert ist, eingehängt werden. In das Gabelende können ein oder mehr Ketten eingehängt werden, deren Nenndicke geringer sein muß, als die Dicke des Aufhängeflansches, wodurch sich der gewünschte Reduktionseffekt ergibt.

Aufhängeglieder nach der Erfindung ermöglichen bei minimaler Lagerhaltung an Verbindungsteilen das Verbinden eines Anschlußgliedes mit einer Kette einer bestimmten Nenndicke, oder mit zwei Ketten einer nächstniedrigen Nenndicke oder mit vier Ketten noch geringerer Nenndicke.

Weitere Merkmale der Erfindung gehen aus den Unteransprüchen hervor.

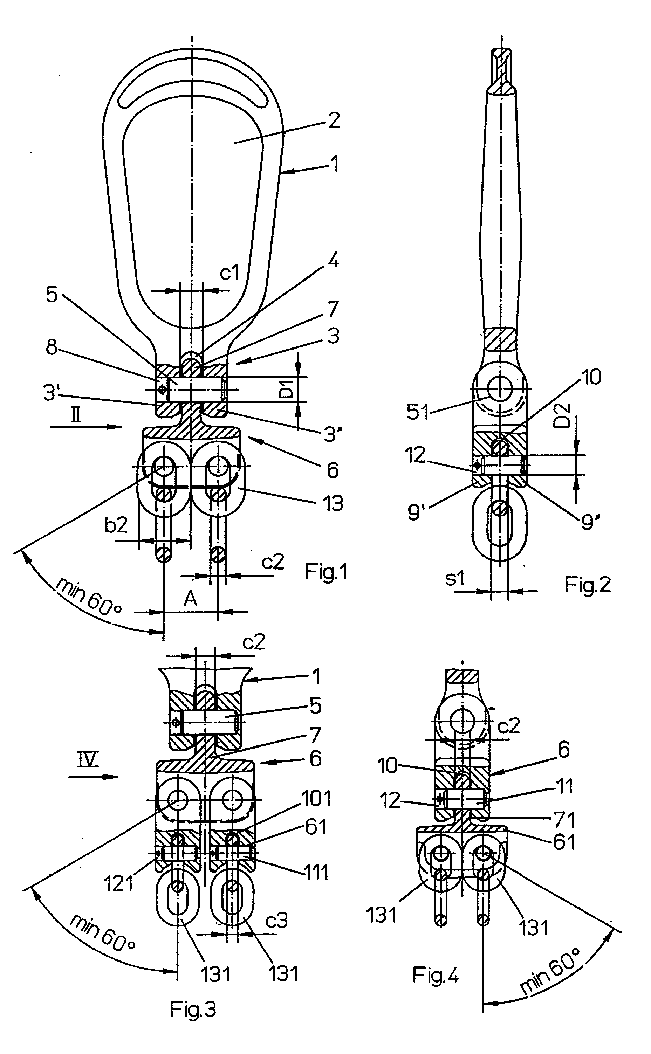

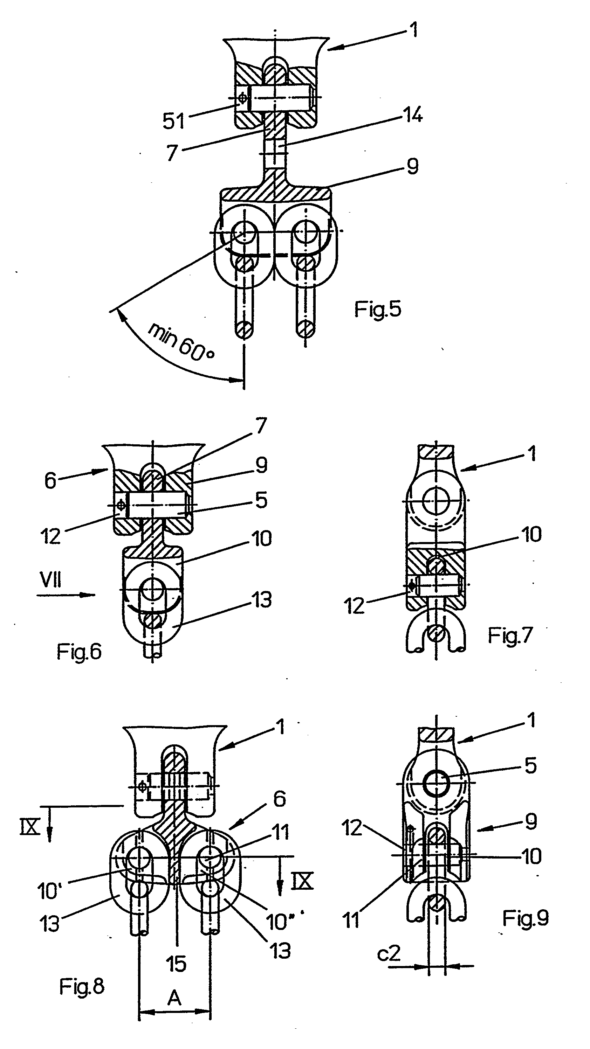

Die Erfindung samt anderen Vorteilen ist im folgenden an Hand beispielsweiser Ausführungsformen beschrieben, die in der Zeichnung veranschaulicht sind. In dieser zeigen Fig. 1 in teilweise geschnittener Seitenansicht ein Verbindungsstück nach der Erfindung, welches in ein herkömmliches Anschlußglied eingehängt ist, wobei in das Gabelende des Verbindungsstückes zwei Ketten eingehängt sind, Fig. 2 eine Ansicht in Richtung des Pfeiles II der Fig. 1, Fig. 3 und 4 in Ansichten wie Fig. 1 und 2 die Kombination zweier Verbindungsstücke nach der Erfindung mit unterschiedlichen Abmes sungen, um insgesamt vier Ketten mit einem Anschlußglied zu verbinden, Fig. 5 eine Variante der Erfindung in einer Darstellung nach Fig. 1, Fig. 6 und 7 in Darstellungen entsprechend Fig. 1 und 2 eine weitere Variante der Erfindung, und Fig. 8 und 9 in Darstellungen wie in Fig. 1 und 2 eine Variante der Erfindung mit einem durch einen Mittensteg geteilten Einführspalt.

Gemäß Fig. 1 und 2 weist ein herkömmliches Anschlußglied 1, das mit einem Auge 2 beispielsweise in einen Kranhaken eingehängt werde kann, am unteren Ende einen Gabelkopf 3 auf, zwischen dessen Gabel teilen $3'$, $3''$ ein Aufnahmespalt 4 verläuft. Die Gabelteile $3'$, $3''$ werden von einem Verbindungsbolzen 5 überbrückt.

In das Anschlußglied 1 ist ein Verbindungsstück 6 nach der Erfindung eingesetzt, das einen oberen Aufhängeflansch 7 mit einer diesen durchsetzenden Bohrung 8 besitzt, sowie weiters ein Gabelende 9. Dieses Gabelende 9 weist einen durchgehenden Einführspalt 10 auf und die Gabelteile $9'$, $9''$ sind von zwei Bolzen 11 überbrückt, die in einem Abstand A parallel zueinander verlaufen und in Durchgangsbohrungen 12 aufgenommen sind.

Das Verbindungsstück 6 kann mit dem Aufhängeflansch 7 in den Aufnahmespalt 4 des Anschlußgliedes 1 eingesetzt und mittels des Bolzens 5 festgehalten werden. In den Einführspalt 10 des Verbindungsstückes 6 können die Endglieder 13 zweier Ketten eingeführt und mittels der Bolzen 11 festgehalten werden.

Wie ersichtlich, entspricht bei dieser Ausführungsform der Mittenabstand A der Durchgangsbohrungen 12 bzw. der Bolzen 11 im wesentlichen der äußeren Breite b2 der eingehängten Kettenglieder 13. Die Fig. 1 und 2 zeigen weiters, daß die eingehängten Kettenglieder 13 sowie die auf diese folgenden Glieder in weitem Maße frei beweglich sind, sodaß Biegebeanspruchungen der Glieder weitgehend ausgeschlossen werden.

Der Bolzen 5 bzw. die zugehörige Bohrung 51 in dem Gabelkopf 3 des Anschlußgliedes 1 weisen einen größeren Durchmesser D1 auf, als die Bolzen 11 bzw. Bohrungen 12 im Gabelende 6, deren Durchmesser mit D2 bezeichnet ist.

Weiters ist es zweckmäßig, wenn - wie gezeigt - die Dicke c1 des Aufhängeflansches 7 größer ist als die Breite s1 des Einführspaltes 10 im Gabelende 9.

Es versteht sich, daß hiedurch das Verbindungsstück 6 ein reduzierendes Bauelement darstellt. In das Anschlußglied 1 kann nämlich eine hier nicht gezeigte Kette mit einer Nenndicke eingehängt werden, die der Dicke c1 des Aufhängeflansches 7 entspricht. Andererseits kann das Verbindungsstück 6 eingehängt werden, in welches nun Ketten eingehängt werden, deren Nenndicke c2 beispielsweise um eine Stufe in einer genormten Kettenreihe kleiner ist, als die Flanschdicke c1.

Wegen des geringen Abstandes A der Bolzen 11 wird bei ungleichmäßiger Belastung der beiden eingehängten Ketten (Glieder 13) eine unerwünschte Biegebelastung des Flansches 7 vermieden.

Fig. 3 und 4 zeigen, wie durch Verwendung zweier Verbindungsstücke 6, 61 insgesamt vier Ketten mit einem Anschlußglied 1 verbunden werden können. In ein Verbindungsstück 6 sind an Stelle von Kettengliedern - wie nach Fig. 1 und 2 -zwei in ihren Dimensionen gegenüber dem Anschlußglied 1 kleinere Verbindungsstücke 61 eingehängt, sodaß nun insgesamt vier Endglieder 131 von vier Kettensträngen analog wie nach Fig. 1 und 2 in die beiden Verbindungsstücke 61 eingehängt werden können. Die Durchmesser der Bolzen 5, 11 und 111 sinken natürlich stufenweise und ebenso die Größen c1, c2 und c3, die hier die Dicke des Flansches 7 des Verbindungsstückes 6, die Dicke des Flansches 71 des Verbindungsstückes 61 und die Nenndichte der Kettenglieder 131 bezeichnen.

Fig. 5 zeigt eine Anordnung wie Fig. 1 doch ist hier der Aufhängeflansch 7 länger ausgebildet und mit einer Bohrung 14 versehen, in die z.B. eine nicht gezeigte Spreizstange für die anzuschließenden Ketten eingeführt oder auch ein anderer Bauteil befestigt werden kann.

Die Ausführung nach Fig. 6 und 7 besitzt in dem Gabelende 9 des Verbindungsstückes 6 bloß eine einzige Durchgangsbohrung 12, sodaß nur eine einzige Kette mit einem Endglied 13 einhängbar ist. Im übrigen entspricht diese Ausführung jener nach Fig. 1 und 2 und wie bei jener verläuft der Aufhängeflansch 7 senkrecht zu dem Einführspalt 10 des Gabelendes 9. Das in Fig. 6 und 7 gezeigte Verbindungsstück dient somit als Reduzierstück.

Die Ausführung nach Fig. 8 und 9 unterscheidet sich von jener nach Fig. 1 und 2 dadurch, daß der Einführspalt 10 durch einen Mittensteg 15 in zwei voneinander getrennte Spaltteile (10', 10'') getrennt ist, sodaß die eingehängten Kettenglieder 13 nicht aneinander sondern an den Außenflanken des Mittensteges 15 anliegen, wodurch sich eine erhöhte Festigkeit des Gabelendes 9 ergibt, die vor allem bei seitlich, d.h. in Richtung parallel zur Achse der Bolzen 11 auftretenden Beanspruchungen der Kettenglieder 13 auftreten können. Hier, wie bei den anderen Ausführungsformen sollte der Mittenabstand A der beiden Durchgangsbohrungen 12 (bzw. 121) nicht größer sein, als das 4,2-fache der Nenndicke c2 (bzw. c3) der einzuhängenden Kettenglieder 13 (bzw. 131).

Bei allen Ausführungsformen, in welche zwei Ketten eingehängt werden können, erfolgt die weitere Dimensionierung der beispielsweise geschmiedeten Verbindungsstücke 6 mit Vorteil in einer Weise, die sicherstellt, daß der Aufhängeflansch 7 die gleiche Tragfähigkeit aufweist, wie das Gabelende, wobei der obere Bolzen 5 dementsprechend eine höhere Festigkeit aufweist, als die beiden unteren Bolzen 11. Wegen der Bolzenbzw. Spaltabmessungen können auch dimensionsmäßig zu große Ketten überhaupt nicht eingehängt werden.

## Ansprüche

1. Verbindungsstück für Kettengehänge, mit einem oberen, in einen Gabelkopf eines Anschlußgliedes einhängbaren Aufhängeteil sowie mit einem unteren Gabelende, das zumindest einen Einführspalt sowie zumindest eine, senkrecht zu dem Einführspalt verlaufende Durchgangsbohrung für einen ein Kettenglied oder den Aufhängeteil eines weiteren Bauteils durchsetzenden Querbolzen aufweist, dadurch gekennzeichnet, daß der Aufhängeteil als von einer Bohrung (8) durchsetzter Aufhängeflansch (7, 71) ausgebildet ist und daß Bolzen (5) und Bohrung (51) des Aufhängeflansches (7, 71) größeren Durchmesser (D1) aufweisen, als Bolzen (11, 111) und Bohrung (12, 121) im Gabelende (9).

2. Verbindungsstück nach Anspruch 1, dadurch gekennzeichnet, daß der Aufhängeflansch (7, 71) senkrecht zu dem Einführspalt (10,101) des Gabelendes (9) verläuft.

3. Verbindungsstück nach Ansrpuch 1 oder 2, dadurch gekennzeichnet, daß das Gabelende (9) zwei parallel zueinander verlaufende Durchgangsbohrungen (12, 121) für zwei, in den Einführspalt (10, 101) eingesetzte Kettenglieder (13, 131) durchsetzende Querbolzen (11, 111) besitzt.

4. Verbindungsstück nach Anspruch 3, dadurch gekennzeichnet, daß der Mittenabstand (A) der beiden Durchgangsbohrungen (12, 121) im wesentlichen der äußeren Breite (b2) der einzuhängenden Kettenglieder (13, 131) entspricht.

5. Verbindungsstück nach Anspruch 3, dadurch gekennzeichnet, daß der Einführspalt (10) durch einen Mittensteg (15) in zwei voneinander getrennte Spaltteile (10', 10") für die zwei Kettenglieder (13) geteilt ist.

6. Verbindungsstück nach Anspruch 3 oder 5, dadurch gekennzeichnet, daß der Mittenabstand (A) der beiden Durchgangs bohrungen (12, 121) maximal das 4,2-fache der Nenndicke (c1, c2) der einzuhängenden Kettenglieder (13, 131) beträgt.

7. Verbindungsstück nach einem der Ansprüche 1 bis 6, dadurch gekennzeichnet, daß in dem Aufhängeflansch (7) zwischen der Bohrung (51) und dem Gabelende (9) eine Zusatzbohrung (14), z.B. für den Anschluß einer Spreizstange, vorgesehen ist (Fig. 5).

8. Verbindungsstück nach einem der Ansprüche 1 bis 7, dadurch gekennzeichnet, daß die Breite (s1) des Einführspaltes (10) des Gabelendes (9) geringer ist, als die Dicke (c1) des Aufhängeflansches (7).

9. Verbindungsstück nach einem der Ansprüche 1 bis 8, dadurch gekennzeichnet, daß die Dicke des Aufhängeflansches (7) der Nenndicke einer genormten Kette entspricht und die Breite (s1) des Einführspaltes (10) des Gabelendes (9) der Nenndicke einer genormten Kette der nächstkleinern Stufe angepaßt ist.

Fig.1

Fig.2

Fig.3

Fig.4

Fig.5

min 60°

Fig.6

VII

Fig.7

Fig.8

IX

A

Fig.9

c2